# EUROPEAN PATENT APPLICATION

(11) **EP 1 128 639 A1**
(43) Date of publication of application: **29.08.2001**
(21) Application number: 00304411.2
(22) Date of filing: 24.05.2000
(51) Int. Cl.: H04M 1/66

(54) **Improved answerphone system**

(30) Priority: 25.05.1999 GB 9911990
(71) Applicant: Pace Micro Technology PLC, Shipley, West Yorkshire BD18 3LF (GB)
(72) Inventor: Entwistle, Paul, Shipley BD18 3LF (GB)
(74) Representative: Wood, Graham

(57) **Abstract**

The invention relates to an improvement to answerphone apparatus which allows the same to be adapted in response to incoming calls. Typically answerphone apparatus includes a recorded message which can be played regardless of the identity of the caller. The present invention allows for the incoming call to be identified where possible and the ID data for the call to be compared to stored entries which include ID data for known callers. The apparatus includes a series of recorded messages which can be selectively played. If an incoming call ID data matches one of the stored entries, the matched entry is linked to a selected message from the number of messages and, if the answerphone is activated, the selected message is played to the caller thus allowing a more customised message to be played to the caller than with conventional apparatus.

## Description

The invention to which this application relates is the provision of an answerphone apparatus and system which has additional advantage over the conventional answerphone apparatus and system which are currently available.

In recent years, the use of answerphones has become increasingly common so that most businesses and many domestic premises have an answerphone connected the incoming telephone line and for the generation of a message, when the occupants of the premises are out or otherwise engaged and also the recording of messages which the caller may wish to leave for the occupiers.

A problem with conventional answerphones is that the message which can be left to be played to callers when the occupier of the premises in which the telephone line is provided is not in, is required to be relatively generic and cannot be caller specific. Thus, every caller who calls the telephone line when the answerphone is set will receive the same message whether they are personal friends, business callers, sales canvassing callers or the like. This therefore means that the user of the answerphone takes the safety-first approach and, rather than giving out any personal information such as their whereabouts at the time of the call or the likely length of time which they will be away from the premises, as they will be concerned that the information is not received by unknown or unscrupulous callers so that, in the worst instances, said information could be used for burglaries to take place when it is known that the occupiers of the premises will be away.

It has recently been found that it is possible for a caller to dictate and access one of a number of messages which may be stored on the answerphone but in this case, it is necessary for the caller firstly to be provided with an identification and then secondly, when they call and receive the answerphone initial message, to input that identification which can then be used by the answerphone apparatus to determine which message shall be played. However, this is a disadvantage in that it is necessary for the caller to enter into an interactive relationship with the answerphone and of course for the caller firstly to have been given an identification number and, secondly to have the identification number to hand and/or remember the same to allow the necessary message to be retrieved. Furthermore, if the user of the answerphone has left a specific message for a specific caller and that caller does not have the required identification number or cannot remember the same then the message will not be heard and this may cause problems to the caller and/or the owner of the answerphone apparatus.

The aim of the present invention is to provide answerphone apparatus which allows for the identification of the caller and, upon identification, the playing of selected one of a number of possible messages to that caller.

In a first aspect of the invention there is provided answerphone apparatus for use with a telecommunications system, said answerphone apparatus comprising a memory means in which one or a plurality of messages can be stored for play to a caller upon activation, and a memory means for the storage of information which may be left by the caller and characterised in that the answerphone apparatus further includes a means for detecting and obtaining identifying data (ID data), when available, for each incoming call made to the apparatus, processing the ID data and with reference to ID data for the call, selecting, when the answerphone is activated, whether or not to play a message to the caller and/or select one of a plurality of messages to be played to the caller.

In one embodiment, the answerphone further comprises a memory in which a number of entries related to known callers which can include caller telephone numbers and other call ID data are stored. Thus, upon an incoming call being received, the ID data for that call is detected and compared to the ID data for the entries held in the memory. Each entry in the memory is also linked by control means to at least one of a plurality of recorded messages in the apparatus.

Thus, in one embodiment, upon an incoming call being received the ID data for that call is detected, compared to the entries held in the memory and, if it matches one of the entries held in the memory, the message linked to that entry is selected and played to the caller. Alternatively, if the ID data for an incoming call does not match any of the entries held in the memory then a default message, or no message, is selected to be played.

Typically, the database of entries in the memory of the apparatus can be created by the user of the answerphone apparatus along with the selection of which message or messages each entry is linked to . Typically the user can also record a message or messages to be played when selected.

The use of the identification data of the incoming telephone call allows the answerphone apparatus to identify the incoming call prior to answering and thereby identify and select one of the number of selectable pre-recorded answerphone messages to be played to the caller if the ID data matches one of the entries in the database.

Thus, for example, if the ID data of an incoming call is identified and matches an entry of a personal friend of the user of the answerphone apparatus then that person entry can be linked to a message which when played gives information which would not normally be provided to other callers such as, for example, where the user of the answerphone is at that time, how long they are likely to be there and/or whether they wish the personal friend to meet them there. Alternatively, if the identification of the caller indicates that it is a business associate, then business sensitive information may be provided which would not be provided to personal friends or other callers and so on.

If the caller is not identified at all, then a normal or default message in a standard form can be selected which can state that the user of the answerphone is not available at that time.

In a further aspect of the invention there is provided a method of receiving a telephone call on a telecommunications system using answerphone apparatus connected to the telecommunications system, said answerphone apparatus including a memory with a plurality of selectable messages to be selectively played to the incoming caller, said method including the steps of identifying an incoming call, obtaining from the incoming call, ID data allowing the identification of the caller and/or the type of call, processing the ID data with reference to a memory in which a number of entries, each including known ID data, can be held, said entries linked to at least one of the selectable messages, and if the received ID data matches the ID data for an entry in the memory the message linked to the said entry is selected by the apparatus and played to the caller.

In one embodiment the identification of the incoming call includes the identification of the type of data received and the operation of the apparatus can be altered to allow for the reception of the data. Thus, if the method identifies the type of data received, i.e. speech call, or e-mail, or fax, the operation of the apparatus can be altered to allow for the reception of the data.

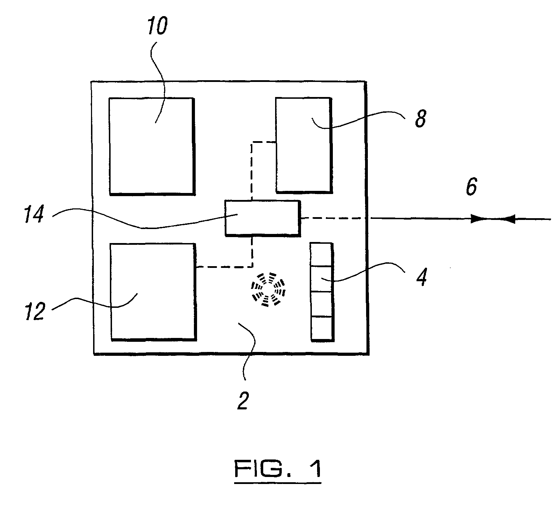

A specific embodiment of the invention is now described with reference to the accompanying drawing. The drawing illustrates an answerphone apparatus 2 which includes operating controls 4 which allow the mode of operation of the answerphone to be selected between inactive and activated, the recording of messages which are to be selectively played when activated, the generation of a database of entries and retrieval of messages.

The answerphone includes a memory 8 which holds a plurality of messages which can be selected to be played to callers, a memory 10 which allows the recordal of messages which may be left by callers and an additional memory 12 which holds a series of known caller entries each of which can include their telephone number, other ID data and also any other details of the known callers.

In one embodiment, each of the messages which is recorded in the memory means 8 is provided with a separate identification or tag. The memory 12 is created by the user of the answerphone and typically will consist of ID data for personal friends, business friends or other known persons to the user. At the time of creating the database, the user can input the ID data such as the telephone number, a brief identification of the person to whom that number belongs and an indication and tag link to one of the selectable messages from the memory 10 which allows the selection of the appropriate message to be played if a call is received from one of the entries in the memory 12.

The link between each entry and a recorded message is achieved by the user inputting the identification code for the appropriate message. If a known caller has several telephone numbers with different ID data, such as conventional and mobile numbers then these can be grouped as one entry or separate entries can be input by the user for each ID data.

The answerphone apparatus 2 is connected to a telephone system such as the telephone line 6 in the normal manner and is provided to be set to be activated by the user.

When activated, the apparatus can answer an incoming telephone call after a designated number of rings and, when it does so, the first stage is for a processor 14 within the answerphone to identify the ID data such as the telephone number of the caller. This data is then compared with the ID data for the entries held in the memory 12. If there is a match the message identification code or tag for that entry is accessed and one of the plurality of selectable messages in the memory means 8 is identified to be played. If the appropriate message is available, that message is then played back to the caller and thus provides the information to them which has been selected by the user.

If the ID date of the call received does not match any of those held in the memory 12, then a default message from the memory means 8 is selected to be played to the caller.

It is envisaged that after the message has been played, the caller has the opportunity to leave a further message to be stored in the memory 10 for subsequent retrieval by the user of the answerphone apparatus.

It is also envisaged that for certain uses, the message selected can provide further instructions for operation of the telephone answerphone so as to provide for the receipt of a fax, E-mail or other communication means and in which case, the mode of operation of the answerphone can be changed to allow the other form of communication to take place.

It should also be appreciated that the answerphone as herein described can be provided as an integral part of other communication apparatus such as, for example, a broadcast data receiver for the reception of digital, audio, video and/or further data for the generation of television material, which data is commonly transmitted via satellite, cable or terrestrial transmission systems. In this example the answerphone apparatus can be integrally provided in the apparatus and may utilise memory devices or memory space which is already provided in the receiver apparatus. Furthermore the receiver apparatus is normally connected to a telecommunications line or telecommunications system to allow the communication of data to and from the broadcast data receiver.

It is envisaged that the messages held in the memory 8 can be re-recorded and changed as required and, particularly, with regard to the message to be left for personal friends, it is envisaged that this message may be changed frequently so as to allow for the user to provide an accurate indication as to their whereabouts when the answerphone is activated. By using answerphone apparatus in accordance with the present invention the user is free to leave messages of this sort as they can be secure in the knowledge that only persons who they know well and trust, will be provided with information which may otherwise be sensitive and/or affect the security of the person and/or their premises.

## Claims

**1.** Answerphone apparatus for use with a telecommunications system, said answerphone apparatus comprising a memory means in which one or a plurality of messages can be stored for play to a caller upon activation, and a memory means for the storage of information which may be left by the caller and **characterised in that** the answerphone apparatus further includes a means for detecting and obtaining identifying data (ID data), when available, for each incoming call made to the apparatus, processing the ID data and with reference to ID data for the call selecting, when the answerphone is activated, whether or not to play a message to the caller and/or select one of a plurality of messages to be played to the caller.

**2.** Answerphone apparatus according to claim 1 **characterised in that** the apparatus further comprises a memory means in which a number of entries including caller telephone numbers and/or ID data are held, each of said entries linked by a control means to a selected message to be played when the answerphone apparatus is activated.

**3.** Answerphone apparatus according to claim 2 **characterised in that** upon a telephone call being received, the ID data for that call is detected, compared to the entries held in the memory and, if it matches one of the entries held in the memory, the message linked to that entry is selected and played to the caller.

**3.** Answerphone apparatus according to claim 2 **characterised in that** if the ID data for an incoming call does not match any of the entries held in the memory then a default message or no message is selected to be played.

**4.** Answerphone apparatus according to claim 2 **characterised in that** the database of entries is created by the user of the answerphone apparatus along with the links to specified messages.

**5.** A method of receiving a telephone call on a telecommunications system using answerphone apparatus connected to the telecommunications system said answerphone apparatus including a memory with a plurality of selectable messages to be selectively played to the incoming caller, said method including the steps of identifying an incoming call, obtaining from the incoming call, ID data allowing the identification of the caller and/or the type of call, processing the ID data with reference to a memory in which a number of entries, each including known ID data, can be held, said entries linked to at least one of the selectable messages, and if the received ID data matches the ID data for an entry in the memory the message linked to the said entry is selected by the apparatus and played to the caller.

**7.** A method according to claim 6 **characterised in that** identification of the incoming call includes the identification of the type of data received and the operation of the apparatus can be altered to allow for the reception of the data.
